# FASCICULE DE BREVET EUROPEEN

(11) **EP 3 607 193 B1**
(45) Date de publication et mention de la délivrance du brevet: **13.01.2021**
(21) Numéro de dépôt: 18712995.2
(22) Date de dépôt: 12.03.2018
(51) Int. Cl.: F02D 41/10, F02D 41/12, F02D 41/14, F02P 5/15

(54) **PROCEDE DE COMMANDE DE COUPLE D'UN MOTEUR A ALLUMAGE COMMANDE**
VERFAHREN ZUR STEUERUNG DES DREHMOMENTS EINES FREMDZÜNDUNGSMOTORS
METHOD FOR CONTROLLING THE TORQUE OF A SPARK-IGNITION ENGINE

(30) Priorité: 03.04.2017 FR 1752836
(43) Date de publication de la demande: 12.02.2020
(73) Titulaire: PSA Automobiles SA, 78300 Poissy (FR)
(72) Inventeur: SOUQUET, Romain, 75017 Paris (FR); GRALL, Sebastien, 94000 Creteil (FR); GALLIENNE, Felix, 92250 La Garenne Colombes (FR)
(86) Numéro de dépôt international: PCT/FR2018/050574
(87) Numéro de publication internationale: WO 2018/185390

(56) Documents cités:
- EP-A2- 1 849 980
- DE-A1- 4 009 791
- DE-T5-112015 000 165
- DE-T5-112015 000 165
- FR-A1- 3 028 292

## Description

La présente invention se rapporte au domaine de la commande de moteur à combustion interne à allumage commandé. L'invention concerne plus particulièrement un procédé de commande de couple d'un tel moteur.

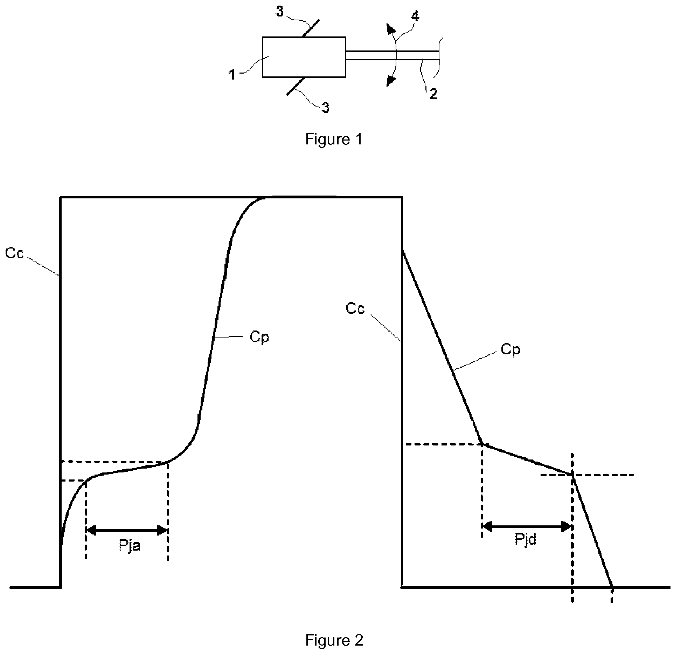

La figure 1 présente schématiquement un groupe motopropulseur équipant un véhicule. Le groupe motopropulseur comporte un moteur thermique 1. Sur la figure 1, le moteur thermique est relié à une transmission 2 comprenant classiquement une boite de vitesse et un dispositif d'embrayage dont seul un élément de liaison avec le moteur 1 est présenté. Le moteur thermique peut être essence ou diesel. La boite de vitesse peut être de type manuelle (BVM), automatisée (BVA), pilotée (BVMP) ou à double embrayage (DCT). La transmission 2 assure le transfert d'un couple généré par le moteur aux roues, non représentées. Le moteur thermique 1 est classiquement posé sur des cales 3 moteur. On appelle jeux moteur le phénomène de torsion 4 des éléments de transmission 2 entre le moment où le moteur thermique 1 se pose sur ses cales 3 et le moment où le moteur thermique entraîne les roues pendant les transitoires d'accélération.

Autrement dit, les jeux moteurs sont le basculement du moteur thermique 1 sur ses cales 3 pendant les transitoires d'accélération et de décélération. Il y a toujours un basculement du moteur lorsqu'on applique du couple alors qu'il n'y en avait pas, par exemple lors d'une demande d'accélération depuis une situation dite de pied levé, c'est-à-dire sans appui sur la pédale d'accélération, ou lors d'une décélération lorsque l'on lève complètement le pied. Les jeux moteur correspondent ainsi au couple appliqué pour lequel ni le moteur thermique ni la roue ne s'entraînent l'un avec l'autre lors d'une phase transitoire d'accélération.

De tels véhicules sont équipés d'un calculateur permettant d'adapter de manière automatique le point de fonctionnement de chacun des organes du véhicule, en particulier le moteur thermique, afin de respecter la volonté du conducteur en termes de couple demandé et obtenir un agrément de conduite déterminé.

Pour obtenir un agrément de conduite optimal, le calculateur met en œuvre classiquement deux types de filtrage du couple demandé par le conducteur, réalisés à l'aide d'un premier module de filtrage dit préventif du couple moteur et d'un second module de filtrage du couple moteur dit curatif.

Le module de filtrage préventif assure un filtrage d'un couple de consigne correspondant à la volonté du conducteur afin de passer les jeux moteur en limitant au maximum les à-coups de la chaîne de traction. Le module de filtrage curatif permet d'atténuer des oscillations du régime moteur en générant un couple correctif en déphasage par rapport à ces oscillations.

On connait du document FR3000993A1 un exemple de filtrage préventif du couple moteur dans lequel en réponse à une demande de couple moteur, donc d'accélération, la consigne de couple moteur augmente instantanément. En réponse à cette demande de couple, le module de filtrage convertit en fonction du temps le couple de consigne en un couple moteur dit préventif qui assure une transition vers le couple de consigne. Cette transition comprend notamment au cours de la montée en couple une période intermédiaire avec une pente plus réduite de montée de couple qui permet ainsi d'assurer un basculement du moteur en douceur et donc de réduire les à-coups de transmission.

Par ailleurs, dans un moteur à allumage commandé, par exemple un moteur à essence, le couple réalisé par le moteur, pour répondre au couple voulu par le conducteur, dépend de la quantité de carburant injecté, de la quantité d'air présente dans la chambre de combustion et du temps d'allumage pour déclencher la combustion.

L'avance à l'allumage se définit comme la différence entre le moment où l'étincelle est déclenchée et celui où le piston atteint son Point Mort Haut. Cette avance peut être quantifiée comme l'angle que forme la bielle par rapport à l'axe du piston, en degré. Il existe une avance à l'allumage dite optimale pour laquelle le rendement est maximal et le moteur fournit, pour une consommation donnée, le couple optimal. Il y a dégradation de l'avance à l'allumage lorsque le contrôle moteur est amené à demander une avance à l'allumage retardée par rapport à l'avance à l'allumage optimale.

On connait encore le document EP1849980A2 correspondant au préambule de la revendication 1.

Le problème à la base de l'invention est ici de gérer la demande de réduction de couple lors du passage des jeux.

Pour résoudre ce problème, il est prévu selon l'invention un procédé de commande de couple d'un moteur à allumage commandé monté sur des cales comportant des moyens d'allumage de la combustion, comprenant les étapes de :
- détermination d'un couple de consigne,
- détermination d'un couple préventif destiné à assurer une transition vers le couple de consigne lors d'une accélération ou une décélération,
- détermination d'une avance à l'allumage pour assurer le couple préventif limitée par une avance minimale de combustion en deçà de laquelle le moteur est considéré comme ne respectant plus un seuil de critère de stabilité de combustion déterminé lorsque le moteur fonctionne en régime stabilisé,
caractérisé en ce que la transition comprend une phase intermédiaire dite de passage des jeux moteur correspondant au moment où le moteur vient en butée sur ses cales et au cours de laquelle on autorise l'avance à l'allumage à prendre une valeur plus faible que l'avance minimale de combustion.

L'effet technique est ainsi d'obtenir une meilleure réduction de couple pendant la phase de passage de jeux de manière simple et efficace.

Diverses caractéristiques supplémentaires peuvent être prévues, seules ou en combinaisons :
En variante, le dépassement de l'avance à l'allumage est borné par une seconde avance à l'allumage minimale, inférieure à l'avance minimale de combustion.

En variante, la seconde avance à l'allumage minimale est prédéterminée par calibration sur véhicule en fonctionnement.

En variante, l'avance minimale de combustion est prédéterminée par calibration sur un banc moteur à régime moteur et charge moteur stabilisés.

L'invention concerne aussi un calculateur, caractérisé en ce qu'il comprend les moyens d'acquisition, de traitement par instructions logicielles stockées dans une mémoire ainsi que les moyens de commande requis à mise en œuvre d'un procédé selon l'une quelconque des variantes précédemment décrites.

L'invention concerne aussi un moteur thermique à allumage commandé comprenant un tel calculateur.

L'invention concerne aussi un véhicule automobile, comprenant un tel moteur thermique à allumage commandé pour son déplacement.

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un moteur thermique relié à un élément transmission.
- La figure 2 est une représentation schématique de l'évolution du couple de consigne et du couple préventif lors d'une demande accélération et lors d'une demande de décélération.

Dans la suite de ce document L'avance à l'allumage est définie par l'angle de rotation vilebrequin qui sépare l'instant d'étincelle du PMH (point mort haut) du moteur thermique.

Un allumage au PMH signifie une avance à l'allumage nulle. Un décalage du point d'allumage après le PMH correspond une valeur négative d'avance à l'allumage. Par exemple une avance de -10 DV (Degré Vilebrequin) signifie un allumage 10 DV après le PMH.

L'invention s'applique particulièrement à un véhicule automobile comportant un moteur thermique à allumage commandé, par exemple un moteur fonctionnant à l'essence, au gaz ou en mélange essence / éthanol pour son déplacement.

La figure 2 présente un exemple illustratif de filtrage préventif du couple moteur dans lequel dans une première phase, en réponse à une demande d'augmentation de couple moteur, de la part du conducteur, donc d'accélération, cette demande est interprétée en couple et la consigne Cc de couple moteur augmente instantanément. En réponse à cette demande de couple, le module de filtrage convertit en fonction du temps le couple de consigne en un couple moteur dit préventif Cp qui assure une transition vers le couple de consigne. Cette transition comprend notamment au cours de la montée en couple Cp une phase intermédiaire PJa dite de passage des jeux moteur correspondant au moment où le moteur vient, au cours de l'accélération, en butée sur ses cales, avec une pente plus réduite de montée de couple, ce qui permet ainsi d'assurer en accélération un basculement du moteur en douceur sur ses cales et donc de réduire les à-coups de transmission.

La figure 2 encore présente dans une deuxième phase, en réponse à une demande de baisse de couple moteur, par exemple suite à un lever de pied du conducteur de la pédale d'accélérateur, donc de décélération, la consigne Cc de couple moteur baisse instantanément. En réponse à cette demande de couple, le module de filtrage convertit en fonction du temps le couple de consigne en un couple moteur dit préventif Cp qui assure une transition vers le couple de consigne. Cette transition comprend notamment au cours de la descente en couple Cp une phase intermédiaire, Pjd, au moment où le moteur vient, au cours de la décélération, en butée sur ses cales avec une pente plus réduite de descente de couple, ce qui permet ainsi d'assurer en décélération un basculement du moteur en douceur sur ses cales.

Afin d'assurer le couple moteur préventif Cp, une avance à l'allumage est déterminée. Cette avance à l'allumage est limitée par une avance à l'allumage minimale de combustion en deçà de laquelle la combustion, lorsque le moteur fonctionne en stabilisé, est considérée instable. La combustion est considérée instable, lorsque le fonctionnement du moteur ne respecte plus un seuil critique d'un critère de stabilité de combustion déterminé. Ce critère de stabilité peut être un critère statistique basé sur le taux de ratés de combustion ou l'écart-type de pression moyenne indiqué.

Cette avance minimale de combustion peut être prédéterminée par calibration sur un banc moteur à régime moteur et charge moteur stabilisés. Par exemple, cette avance minimale de combustion peut être -20 DV.

Cependant, comme cette avance minimale calibrée en statique ne répond pas aux besoins dynamiques, conformément à l'invention, lors de phase intermédiaire dite de passage des jeux moteur en accélération Pja, ou en décélération Pjd, on autorise l'avance à l'allumage à prendre une valeur plus faible que cette avance minimale de combustion.

Ce dépassement autorisé de l'avance minimale de combustion lors de la phase intermédiaire est toutefois borné par une seconde limite d'avance à l'allumage, inférieure à l'avance minimale de combustion. Par exemple, cette seconde limite d'avance à l'allumage peut être, de -36 DV.

Cette seconde avance à l'allumage minimale est prédéterminée par calibration sur un véhicule en fonctionnement, pour être représentative de conditions réelles d'agrément de conduite.

On peut se permettre de dépasser l'avance minimale de combustion car la courte durée de la phase intermédiaire évite les ratés de combustion (en ce qu'elle laisse peu de temps pour qu'un raté ait des chances d'apparaitre). On permet ainsi au moteur d'aller au-delà des limites de stabilité déterminées en fonctionnement stabilisé sur des phases dynamiques, pendant un temps déterminé et ainsi mieux suivre le couple préventif demandé.

Cette invention permet de garantir une prestation d'agrément moteur avec un passage des jeux moteurs offrant un minimum de ressenti client.

Cette invention ne nécessite aucun coût supplémentaire mais améliore grandement les prestations des véhicules équipés d'un moteur thermique.

## Revendications

1. Procédé de commande de couple d'un moteur à allumage commandé monté sur des cales comportant des moyens d'allumage de la combustion, comprenant les étapes de :
- détermination d'un couple de consigne (Cc),
- détermination d'un couple préventif (Cp) destiné à assurer une transition vers le couple de consigne (Cc) lors d'une accélération ou une décélération,
- détermination d'une avance à l'allumage pour assurer le couple préventif (Cp) limitée par une avance minimale de combustion en deçà de laquelle le moteur est considéré comme ne respectant plus un seuil de critère de stabilité de combustion déterminé lorsque le moteur fonctionne en régime stabilisé,
**caractérisé en ce que** la transition comprend une phase intermédiaire dite de passage des jeux moteur (Pja, Pjd) correspondant au moment où le moteur vient en butée sur ses cales et au cours de laquelle on autorise l'avance à l'allumage à prendre une valeur plus faible que l'avance minimale de combustion.

2. Procédé selon la revendication 1, **caractérisé en ce que** le dépassement de l'avance à l'allumage est bornée par une seconde avance à l'allumage minimale, inférieure à l'avance minimale de combustion.

3. Procédé selon la revendication 2, **caractérisé en ce que** la seconde avance à l'allumage minimale est prédéterminée par calibration sur véhicule en fonctionnement.

4. Procédé selon l'une quelconque des revendications précédentes, **caractérisé en ce que** l'avance minimale de combustion est prédéterminée par calibration sur un banc moteur à régime moteur et charge moteur stabilisés.

5. Calculateur, **caractérisé en ce qu'**il comprend les moyens d'acquisition, de traitement par instructions logicielles stockées dans une mémoire ainsi que les moyens de commande requis à mise en œuvre d'un procédé selon l'une quelconque des revendications précédentes.

6. Moteur thermique à allumage commandé, **caractérisé en ce qu'**il comprend un calculateur selon la revendication précédente.

7. Véhicule automobile, **caractérisé en ce qu'**il comprend un moteur thermique à allumage commandé selon la revendication précédente pour son déplacement.

## Patentansprüche

1. Verfahren zum Steuern des Drehmoments eines Ottomotors, der an Unterlegkeilen montiert ist, die Verbrennungszündmittel umfassen, umfassend die Schritte :
- Bestimmung eines Solldrehmoments (Cc),
- Bestimmen eines Vordrehmoment
(Cp) entwickelt, um sicherzustellen, einen Übergang zu dem Solldrehmoment (CC), wenn die Beschleunigung oder e Verzögerung,
- Bestimmung einer Zündvorverstellung auf das präventive Drehmoment (Cp) zu gewährleisten, durch eine minimale Verbrennungs voraus begrenzt, unterhalb denen der Motor betrachtet wird , auf nicht mehr erfüllt eine Schwelle von Verbrennungsstabilitätskriterium bestimmt, wenn der Motor läuft, in Regime stabilisiert, aften ed, daß der Übergang gehört eine sogenannte Zwischenphase des Durchgangs der Maschine setzt (Pja, Pjd) entspricht, in dem der motor auf seiner Pads und während deren Rahmen Zündvorschub, um einen niedrigeren Wert als den minimalen Verbrennungsvorschub anzunehmen.

2. Verfahren nach Anspruch 1, **dadurch gekennzeichnet, dass** der Überlauf von der Zündung Voraus begrenzt durch eine zweite minimale Vorzündung, kleiner als die minimalen Verbrennungs voraus.

3. Verfahren nach Anspruch 2, **dadurch gekennzeichnet, dass** der zweite minimale Zündvorschub durch Kalibrierung an einem in Betrieb befindlichen Fahrzeug vorgegeben ist.

4. Verfahren nach einem der vorhergehenden Ansprüche, **dadurch gekennzeichnet, dass** die vorab Mindest Verbrennung vorbestimmt ist durch Kalibrierung auf einem Motorprüfstand, um die Motordrehzahl und
der Motorlast stabilisiert.

5. Computer, der **dadurch gekennzeichnet ist, dass** er die Mittel zum Erfassen, Verarbeiten durch in einem Speicher gespeicherte Softwareanweisungen sowie die Steuermittel umfasst, die erforderlich sind, um ein Verfahren gemäß einem der vorhergehenden Ansprüche zu implementieren.

6. Thermal Motors mit gesteuerter Zündung, **dadurch gekennzeichnet, dass** sie einen Computer umfassen, nach dem vorhergehenden Anspruch.

7. Kraftfahrzeug, **dadurch gekennzeichnet, dass** es einen thermischen Motor mit gesteuerter Zündung gemäß dem vorhergehenden Anspruch für seinen Hubraum umfasst.

## Claims

1. Method for controlling the torque of a spark ignition engine mounted on chocks comprising combustion ignition means, comprising the steps of:
- determination of a setpoint torque (Cc),
- determining a pre-torque (Cp) designed to ensure a transition towards the setpoint torque (Cc) when accelerating or deceleration,
- determination of an ignition advance to ensure the preventive torque (Cp) limited by a minimum combustion advance below which the engine is considered to no longer meet a threshold of combustion stability criterion determined when the engine is running
in regime stabilized, **characterized in that** the transition comprises an intermediate phase of passage of the engine sets (Pja, Pjd) corresponding to the moment when the engine comes into abutment on its shims and during which authorizes ignition advance to take a lower value than the minimum combustion advance.

2. Method according to Claim 1, **characterized in that** the overrun of the ignition advance is limited by a second minimum ignition advance, less than the minimum combustion advance.

3. Method according to Claim 2, **characterized in that** the second minimum ignition advance is predetermined by calibration on a vehicle in operation.

4. Method according to any one of the preceding claims, **characterized in that** the advance minimum e combustion is predetermined e by calibration on an engine bench to engine speed and engine load stabilized.

5. Computer, **characterized in that** it comprises the means of acquisition, of processing by software instructions stored in a memory as well as the control means required to implement a method according to any one of the preceding claims.

6. Thermal engine with controlled ignition, **characterized in that** it comprises a computer according to the preceding claim.

7. Motor vehicle, **characterized in that** it comprises a thermal engine with controlled ignition according to the preceding claim for its displacement.
